# EUROPÄISCHE PATENTSCHRIFT

(11) **EP 1 878 104 B1**
(45) Veröffentlichungstag und Bekanntmachung des Hinweises auf die Patenterteilung: **23.10.2013**
(21) Anmeldenummer: 05744804.5
(22) Anmeldetag: 30.04.2005
(51) Int. Cl.: H02K 1/28

(54) **VERFAHREN ZUM MONTIEREN EINES ANKERBLECHPAKETS AUF EINER ANKERWELLE UND ANKERWELLE MIT AUFGEPRESSTEM ANKERBLECHPAKET**
METHOD FOR MOUNTING AN ARMATURE LAMINATED CORE ON AN ARMATURE SHAFT AND ARMATURE SHAFT WITH PRESSED-ON ARMATURE LAMINATED CORE
PROCEDE POUR MONTER UN NOYAU FEUILLETE D'INDUIT SUR UN ARBRE D'INDUIT ET ARBRE D'INDUIT MUNI D'UN NOYAU FEUILLETE D'INDUIT APPLIQUE PAR COMPRESSION

(43) Veröffentlichungstag der Anmeldung: 16.01.2008
(73) Patentinhaber: Metabowerke GmbH, 72622 Nürtingen (DE)
(72) Erfinder: SCHMOHL, Michael, 72119 Ammerbuch (DE); FALTER, Norbert, 72622 Neckarhausen (DE)
(74) Vertreter: Raunecker, Klaus Peter
(86) Internationale Anmeldenummer: PCT/EP2005/004715
(87) Internationale Veröffentlichungsnummer: WO 2006/117010

(56) Entgegenhaltungen:
- DE-A1- 2 322 632
- DE-A1- 4 432 356
- US-A- 6 122 817
- US-A1- 2002 153 783
- US-B1- 6 265 802

## Beschreibung

Die Erfindung betrifft ein Verfahren zum Montieren eines Ankerblechpakets auf einer Ankerwelle. Außerdem betrifft die Erfindung eine Ankerwelle mit aufgepresstem Ankerblechpaket für einen Elektromotor.

Es ist bekannt, zum Aufpressen eines Ankerblechpakets auf eine Ankerwelle die Ankerwelle mit dem lose aufgeschobenen Ankerblechpaket in eine Press-/Gießform einzulegen und ein elektrisch isolierendes Kunststoffmaterial zwischen Ankerwelle und Ankerblechpaket einzupressen. Das Verfahren ist aufwendig und teuer, und bei Wärmeausdehnung im Betrieb des Elektromotors kann nicht stets gewährleistet werden, dass die auftretenden Drehmomente das Ankerblechpaket nicht gegenüber der Welle verdrehen.

Auch wenn Ankerbleche mit einem geringfügigen Untermaß der Öffnung auf eine Ankerwelle aufgeschoben werden, kann ein Festsitz nicht für alle Drehmomente garantiert werden, außerdem ist dieses Verfahren nicht prozesssicher und von der Materialalterung abhängig.

Gemäß EP 0 299 100 A1 wird die Ankerwelle derart verformt, dass sie an ihrer Oberfläche Klinken aufweist, die gegen komplementär ausgebildete Anlaufschrägen in Umfangsrichtung der Öffnung des Ankerblechpakets anlaufen und so einen Formschluss in Drehrichtung bewirken. Eine derartige Ausbildung ist aufwendig, und es ist schwierig, das Ankerblechpaket spielfrei auf der Ankerwelle anzuordnen.

Nach einem weiteren sehr aufwendigen Verfahren zur isolierenden Montage eines Ankerblechpakets auf einer Ankerwelle gemäß DE 44 32 356 A1 wird zunächst ein Rohr aus einem verformbaren elektrisch isolierenden Material in die Öffnung des Ankerblechpakets eingeschoben. Danach wird die gegenüber dem Rohr mit geringem Übermaß gefertigte Ankerwelle in das Rohr eingepresst, wodurch das Rohr aufgedehnt wird und bereichsweise in Aussparungen des Ankerblechpakets eingedrückt wird.

Ein Verfahren gemäß dem Oberbegriff des Anspruchs 1 ist bekannt aus US 6,265,802 B1, wobei gemäß dieser Druckschrift zusätzlich zum Aufpressen des Ankerblechpakets ein Kleber verwendet wird, um eine drehfeste Anordnung zu erreichen. Bei einem Verfahren nach DE-A-23 22 632 werden an einer Kunststoffhülse innen und außen Vorsprünge vorgesehen, und die Kunststoffhülse wird in das Blechpaket eingeschoben, und dann erst wird die Welle eingepresst, wobei die Hülse sich ausdehnt und mit dem Blechpaket verankert. Nach US 2002/0153783 A1 wird eine drehfeste Anordnung durch eine Sechskantform einer kunststoffummantelten Welle erreicht.

Ausgehend von bekannten Verfahren liegt der vorliegenden Erfindung die Aufgabe zugrunde, ein einfaches und kostengünstiges, jedoch zuverlässiges Herstellverfahren zum Montieren eines Ankerblechpakets auf einer Ankerwelle für einen Elektromotor anzugeben.

Diese Aufgabe wird durch ein Verfahren mit den Merkmalen des Anspruchs 1 gelöst.

Die jeweilige zentrale Öffnung der Ankerbleche mit dem wenigstens einen Vorsprung ist derart bemessen, dass die Ankerbleche oder ein hieraus insbesondere zuvor gebildetes Ankerblechpaket nicht frei, sondern nur unter Eingraben des Vorsprungs in die Oberfläche des Kunststoffs der Ankerwelle aufgeschoben werden kann. Hierbei wird Kunststoffmaterial abgetragen, d. h. es kommt zu einem Abschaben oder Abheben von Spänen des Kunststoffmaterials infolge des Eingrabens und Verdrängens von Kunststoffmaterial durch den Vorsprung oder die Vorsprünge beim Aufpressen der Ankerbleche auf die Ankerwelle. Hierdurch wird aber zugleich ein auf sehr einfache Weise herstellbarer Formschluss in Umdrehungsrichtung zwischen Ankerblechpaket und Ankerwelle erreicht, der den im Betrieb auftretenden Drehmomenten sicher standzuhalten vermag. Das abgetragene Kunststoffmaterial fällt dabei beim Aufpressen der Ankerbleche infolge der Schwerkraft nach unten, oder es wird durch geeignete Absaugmittel abgeführt.

Erfindungswesentlich ist dabei, daß die Vorsprünge in radialer Richtung 0,05 mm - 0,4 mm, insbesondere 0,1 mm - 0,3 mm und weiter insbesondere 0,1 mm - 0,25 mm in die Oberfläche des Kunststoffs eingegraben werden. Dabei werden die Ankerbleche zuerst zu einem Paket angeordnet und dann wird das Ankerblechpaket als Ganzes auf die Ankerwelle aufgepresst. Die hierbei aufzubringende Aufpresskraft ist nicht wesentlich größer als diejenige Kraft, die mit dem Aufpressen des ersten Ankerblechs verbunden wäre. Weiterhin ist das Ankerblechpaket erfindungsgemäß so ausgebildet, dass bei einem Durchmesser der Öffnung außerhalb des wenigstens einen Vorsprungs von 5 - 15 mm, insbesondere von 8 - 12 mm, der wenigstens eine Vorsprung sich von einem konzentrischen die Öffnung begrenzenden Randabschnitt 0,05 - 0,4 mm, insbesondere 0,1 mm - 0,3 mm und weiter insbesondere 0,1 mm - 0,25 mm in radialer Richtung nach innen erstreckt.

Vorzugsweise sind wenigstens zwei Vorsprünge, insbesondere wenigstens drei Vorsprünge vorgesehen, die vorzugsweise gleichmäßig in Umfangsrichtung verteilt angeordnet sind.

Die Öffnung der Ankerbleche bzw. eines hieraus gebildeten Ankerblechpakets in Bereichen außerhalb des Vorsprungs oder außerhalb der Vorsprünge weist einen Durchmesser auf, der im Wesentlichen dem Außendurchmesser der Ankerwelle entspricht; er ist vorzugsweise geringfügigst geringer als der Außendurchmesser der Ankerwelle. Bei einem Außendurchmesser der Ankerwelle von 5 bis 15 mm, insbesondere von 8 bis 12 mm ist der Durchmesser der Öffnung der Ankerbleche (außerhalb der Vorsprünge) etwa 5 bis 10 µm kleiner als der Außendurchmesser der Ankerwelle, um einen allseitigen Sitz des Anketblechpakets auf der Ankerwelle zu erreichen. Zweckmäßigerweise können auch noch Entlastungsausnehmungen in den Ankerblechen vorgesehen sein, die ein Auftreten übermäßiger Spannungen beim Aufpressen der Ankerbleche oder auch im Betrieb des Elektromotors infolge von Temperaturausdehnung verhindern.

Des Weiteren erweist es sich als zweckmäßig, dass der spitz auslaufende Vorsprung an seinem radial inneren Ende einen Krümmungsradius von höchstens 0,4 mm, insbesondere von höchstens 0,3 mm und weiter insbesondere von höchstens 0,25 mm aufweist.

Dabei beträgt die Dicke der Ankerbleche vorteilhafterweise 0,3 mm - 0,8 mm, insbesondere 0,4 mm - 0,7 mm.

Des Weiteren wird Schutz beansprucht für eine Ankerwelle mit aufgepresstem Ankerblechpaket mit den Merkmalen des Anspruchs 4.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform der Erfindung. In der Zeichnung zeigt:
- Figur 1: eine Seitenansicht einer Ankerwelle mit aufgepresstem Ankerblechpaket nach der Erfindung;
- Figur 2: eine Längsschnittansicht mit Schnittebene A-A in Figur 1;
- Figuren 3a-3f: verschiedene Ansichten eines Ankerblechs.

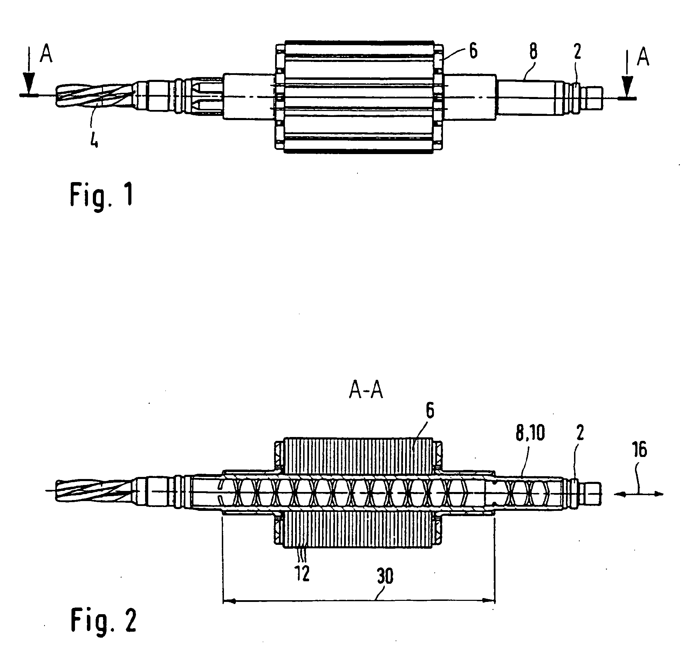

Figuren 1 und 2 zeigen eine Ankerwelle 2 für einen Elektromotor, beispielsweise für ein Elektrohandwerkzeuggerät. Die Ankerwelle 2 ist an einem freien Endabschnitt in Form eines Ritzels 4 ausgebildet. Da sich ein nicht dargestellter Getriebestrang, der sich an das Ritzel 4 anschließt, nach außerhalb des Elektrohandwerkzeuggeräts erstreckt, ist ein Ankerblechpaket 6 gegenüber der Ankerwelle 2 elektrisch isoliert. Hierfür trägt die Ankerwelle 2 eine Ummantelung 8 aus einem elektrisch isolierenden Kunststoff 10: Die Ankerwelle 2 könnte aber auch aus elektrisch isolierendem Vollkunststoff ausgebildet sein. Das Ankerblechpaket besteht in bekannter Weise aus einer Vielzahl parallel zueinander angeordneter und gegeneinander elektrisch isolierter Ankerbleche 12. Jedes Ankerblech 12 weist eine zentrale Öffnung 14 auf, mit der es auf die Ankerwelle 2 in axialer Richtung 16 der Ankerwelle 2 aufgeschoben oder aufgepresst ist.

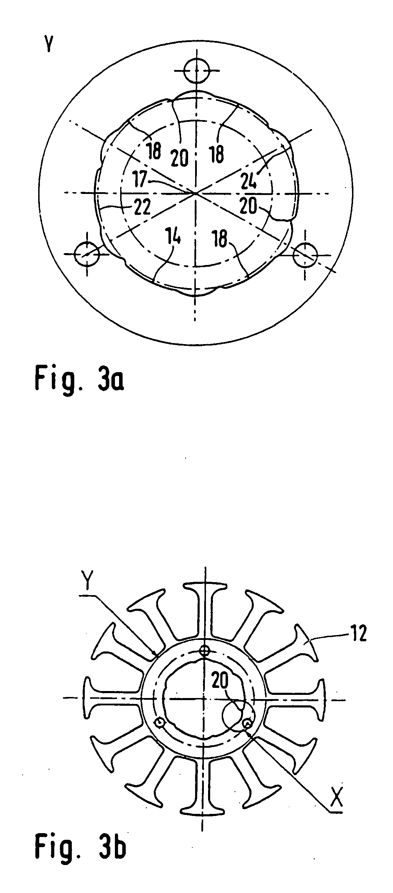

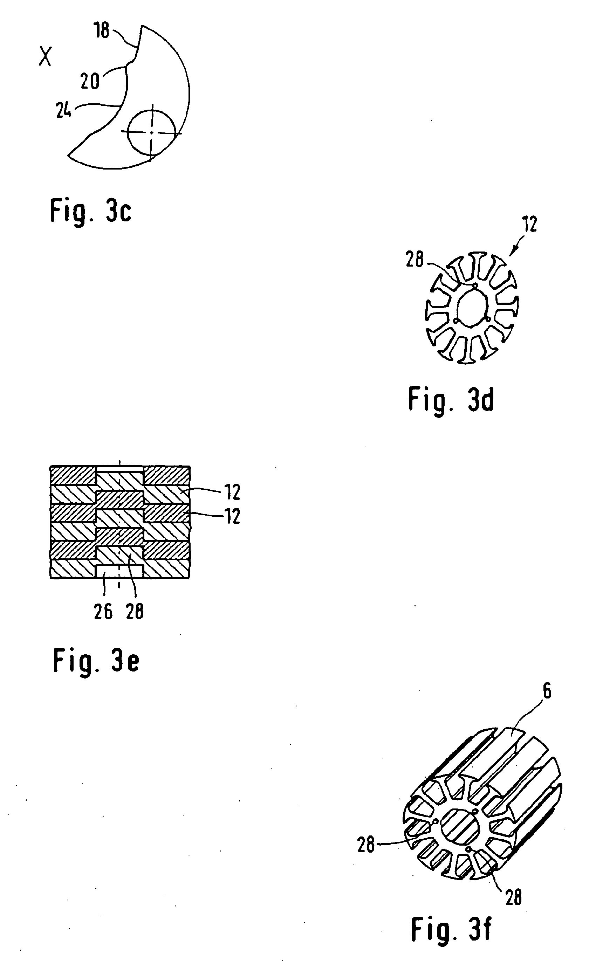

Die Figuren 3a bis 3f zeigen verschiedene Ansichten eines erfindungsgemäß ausgebildeten Ankerblechs 12. Aus Figur 3a, welche nur die zentrale Öffnung 14 verdeutlichen soll, und Figuren 3b und Detaildarstellung nach Figur 3c erkennt man die Gestaltung der zentralen Öffnung 14. Die Öffnung 14 ist begrenzt durch eine Mehrzahl von konzentrisch zu einem Mittelpunkt 17 verlaufenden Randabschnitten 18. Von diesen konzentrischen Randabschnitten 18 erstrecken sich im dargestellten Fall sechs Vorsprünge 20 in radialer Richtung nach innen.

Die konzentrischen Randabschnitte 18 beschreiben einen Innendurchmesser, der im dargestellten Fall nur einige µm geringer ist als der Außendurchmesser der kunststoffummantelten Ankerwelle 2.

Ausgehend von den konzentrischen Randabschnitten 18 erstrecken sich die Vorsprünge 20 im dargestellten Fall bei einem Öffnungsdurchmesser von 10 mm um 0,15 mm nach radial innen. Ein einbeschriebener Kreis 22, der durch die nach radial innen vorspringenden Vorsprünge 20 begrenzt oder definiert wird, weist eine lichte Querschnittsfläche auf, die im dargestellten Fall mit 9,7 mm Durchmesser geringer ist als der Außendurchmesser der kunststoffummantelten Ankerwelle 2, der 10 mm beträgt.

Neben einem jeweiligen Vorsprung 20 ist eine Ausnehmung 24 vorgesehen, bei der es sich um eine Spannungsentlastungstasche handelt, um zu verhindern, dass Spannungsspitzen innerhalb des Materials der Ankerbleche 12 bei der Herstellung oder beim Betrieb des Elektromotors auftreten. Ihnen kommt im Hinblick auf die Erreichung eines Festsitzes der Ankerbleche 12 bzw. eines hieraus hergestellten Ankerblechpakets 6 beim Aufpressen auf eine Ankerwelle 2 keine unmittelbare Bedeutung zu.

Figur 3d zeigt perspektivisch ein Ankerblech 12. Aus Figur 3e sind in axialer Richtung 16 gebildete punktförmige Fixierausnehmungen 26 und hierzu komplementäre Fixiervorsprünge 28 ersichtlich, die auch in den vorangegangenen Figuren angedeutet sind und mit deren Hilfe die Ankerbleche 12 in einer vorbestimmten Montagelage zueinander fixiert werden. Schließlich zeigt Figur 3f eine perspektivische Ansicht eines aus einer Vielzahl von Ankerblechen 12 gebildeten Ankerblechpakets 6.

Das Ankerblechpaket 6 wird dann in axialer Richtung 16 auf die Ankerwelle 2 aufgeschoben. Dabei werden die mit einem Krümmungsradius von 0,2 mm spitz auslaufenden Vorsprünge 20 in die Oberfläche der Ummantelung 8 aus elektrisch isolierendem Kunststoff 10 eingegraben. Der Außendurchmesser in dem betreffenden aus Figur 2 ersichtlichen Abschnitt 30 der Ankerwelle 2 beträgt wie erwähnt 10 mm, so dass sich die Vorsprünge 20 mit ihrer gesamten radialen Erstreckung über die konzentrischen Randabschnitte 18, also mit ca. 0,15 mm, in die Ummantelung 8 eingraben. Dabei wird Kunststoff 10 aus der Oberfläche herausgeschabt oder spanend abgehoben. Er fällt nach unten oder wird abgesaugt. Im Ergebnis ist eine formschlüssige und in Umfangsrichtung drehfeste und spielfreie Kopplung des Ankerblechpakets 6 auf der Ankerwelle 2 erreicht.

## Patentansprüche

1. Verfahren zum Montieren eines Ankerblechpakets (6) auf einer Ankerwelle (2) für einen Elektromotor, wobei die Ankerwelle (2) entweder aus elektrisch isolierendem Vollkunststoff gebildet ist oder eine mit elektrisch isolierendem Kunststoff (10) ummantelte Welle ist, wobei die Ummantelung (8) eine Dicke von wenigstens 1 mm aufweist, mit folgenden Merkmalen:
- Herstellen von Ankerblechen (12), deren zentrale Öffnung (14) für die Ankerwelle (2) einen unrunden Querschnitt mit wenigstens einem nach radial innen erstreckten Vorsprung (20) aufweist, wobei der Durchmesser eines einbeschriebenen eine lichte Querschnittsfläche der Öffnung (14) bildenden Kreises (22) kleiner ist als der Außendurchmesser der Ankerwelle (2),
- Anordnen dieser Ankerbleche (12) zu einem Ankerblechpaket (6) und dann
- Aufpressen des Ankerblechpakets (6) auf die Ankerwelle (2) in axialer Richtung der Ankerwelle (2)
**dadurch gekennzeichnet,**
- **dass** bei einem Durchmesser der Öffnung (14) der Ankerbleche (12) außerhalb des wenigstens einen Vorsprungs (20) von 5 - 15 mm, der wenigstens eine Vorsprung (20) sich von einem konzentrischen die Öffnung (14) begrenzenden Randabschnitt (18) 0,05 mm - 0,4 mm in radialer Richtung nach innen erstreckt,
- **dass** beim Aufpressen der Ankerbleche (12) auf die Ankerwelle (2) in axialer Richtung (16) der Ankerwelle (2) der wenigstens eine Vorsprung (20) in radialer Richtung 0,05 mm - 0,4 mm in die Oberfläche des Kunststoffs (10) der Ankerwelle (12) eingegraben wird und dabei eine Verdrehsicherung des Ankerblechpakets (6) auf der Ankerwelle (2) bewirkt wird.

2. Verfahren nach Anspruch 1, **dadurch gekennzeichnet, dass** wenigstens zwei nach radial innen erstreckte Vorsprünge (20) vorgesehen sind, die beim Aufpressen in die Oberfläche des Kunststoffs (10) eingegraben werden.

3. Verfahren nach Anspruch 1 oder 2, **dadurch gekennzeichnet, dass** die Vorsprünge (20) in radialer Richtung 0,1 mm - 0,3 mm und weiter insbesondere 0,1 mm - 0,25 mm in die Oberfläche des Kunststoffs eingegraben werden.

4. Ankerwelle (2) mit aufgepresstem Ankerblechpaket (6) für einen Elektromotor, wobei die Ankerwelle (2) entweder aus elektrisch isolierendem Vollkunststoff gebildet ist oder eine mit elektrisch isolierendem Kunststoff (10) ummantelte Welle ist, wobei die Ummantelung (8) eine Dicke von wenigstens 1 mm aufweist, und wobei das aus Ankerblechen (12) mit einer unrunden Öffnung (14) mit wenigstens einem nach radial innen in die Öffnung (14) erstreckten Vorsprung (20) gestapelte Ankerblechpaket (6) zum Aufpressen auf die Ankerwelle (2) ausgebildet ist, **dadurch gekennzeichnet, dass** der wenigstens eine Vorsprung (20) spitz ausgebildet ist und nach dem axialen Aufpressen in die Kunststoffoberfläche der Ankerwelle (2) 0,05 mm - 0,4 mm in radialer Richtung nach innen eingegraben ist und dabei eine Verdrehsicherung für das Ankerblechpaket (6) gegenüber der Ankerwelle (2) bildet und dass bei einem Durchmesser der Öffnung (14) der Ankerbleche (12) außerhalb des wenigstens einen Vorsprungs (20) von 5 - 15 mm der wenigstens eine Vorsprung (20) sich von einem konzentrischen die Öffnung (14) begrenzenden Randabschnitt (18) 0,05 mm - 0,4 mm in radialer Richtung nach innen erstreckt.

5. Ankerwelle mit aufgepresstem Ankerblechpaket (6) nach Anspruch 4, **dadurch gekennzeichnet, dass** die Ummantelung eine Dicke von wenigstens 1,2 mm aufweist.

## Claims

1. Method for mounting a laminated armature core (6) on an armature shaft (2) for an electric motor, wherein said armature shaft (2) is either formed from electrically insulating solid plastic or is a shaft which is sheathed with electrically insulating plastic (10), and wherein said sheath (8) has a thickness of at least 1 mm, said method comprising the following features:
- manufacturing of armature laminations (12) whose central aperture (14) for the armature shaft (2) has a non-circular cross-section with at least one projection (20) which is extended radially inwards, wherein the diameter of an inscribled circle (22) that constitutes a clear cross-sectional area of the aperture (14) is smaller than the outer diameter of the armature shaft (2);
- arranging of the said armature laminations (12) to form a laminated armature core (6); and then
- pressing of said laminated armature core (6) onto the armature shaft (2) in the axial direction of said armature shaft (2);
**characterised in**
- **that**, in the case of a diameter of the aperture (14) in the armature laminations (12), outside the at least one projection (20), of 5 - 15 mm, said at least one projection (20) extend 0,05 mm - 0,4 mm inwards in the radial direction from a concentric edge section (18) that bounds the aperture (14);
- **that**, when the armature laminations (12) are pressed onto the armature shaft (2) in the axial direction (16) of said armature shaft (2), the at least one projection (20) is sunk 0,05 mm - 0,4 mm into the surface of the plastic (10) of the armature shaft (2) in the radial direction, thereby effecting an antirotation protection of the laminated armature core (6) on the armature shaft (2).

2. Method according to Claim 1, **characterised in that** at least two projections (20) which are extended radially inwards are provided, which are sunk into the surface of the plastic (10) when the pressing-in operation takes place.

3. Method according to Claim 1 or 2, **characterised in that** the projections (20) are sunk 0,1 mm - 0,3 mm, and also, in particular, 0,1 mm - 0,25 mm, into the surface of the plastic in the radial direction.

4. Armature shaft (2) with a pressed-on laminated armature core (6) for an electric motor, wherein said armature shaft (2) is either formed from electrically insulating solid plastic or is a shaft which is sheathed with electrically insulating plastic (10), wherein said sheath (8) has a thickness of at least 1 mm, and wherein the laminated armature core (6), which is formed from a stack of armature laminations (12) with a non-circular aperture (14) with at least one projection (20) which is extended radially inwards into said aperture (14), is designed to be pressed onto the armature shaft (2),
**characterised in that** the at least one projection (20) is of pointed design and, after being pressed on axially, is sunk 0,05 mm - 0,4 mm inwards into the plastic surface of the armature shaft (2) in the radial direction and thereby constitutes a means of anti-rotation protection of the laminated armature core (6) in relation to the armature shaft (2), and that, in the case of a diameter of the aperture (14) in the armature laminations (12), outside the at least one projection (20), of 5 - 15 mm, said at least one projection (20) extends 0,05 mm - 0,4 mm inwards in the radial direction from a concentric edge section (18) that bounds the aperture (14).

5. Armature shaft with a pressed-on laminated armature core (6) according to Claim 4, **characterised in that** the sheath has a thickness of at least 1,2 mm.

## Revendications

1. Procédé pour monter un paquet de tôles d'induit (6) sur un arbre d'induit (2) pour un moteur électrique, dans lequel l'arbre d'induit (2) est soit réalisé intégralement en un matériau synthétique électriquement isolant soit sous la forme d'un arbre enrobé d'un matériau synthétique électriquement isolant (10), dans lequel l'enrobage (8) a une épaisseur d'au moins 1 mm, avec les caractéristiques suivantes :
- fabriquer les tôles d'induit (12) dont l'ouverture centrale (14) pour l'arbre d'induit (2) comporte une section transversale non circulaire avec au moins une protubérance radiale (20) se dressant vers l'intérieur, dans lequel le diamètre d'un cercle inscrit (22) dans une lumière de la surface de la section transversale de l'ouverture (14) est inférieur au diamètre extérieur de l'arbre d'induit (2),
- mettre en place ces tôles d'induit (12) dans un paquet de tôles d'induit (6) et ensuite
- insérer le paquet de tôles d'induit (6) sur l'arbre d'induit (2) selon une direction axiale de l'arbre d'induit (2)
**caractérisé en ce que**,
- pour un diamètre de l'ouverture (14) des tôles d'induit (12), outre ladite au moins une protubérance (20), de 5 - 15 mm, ladite au moins une protubérance (20) s'étend au-delà d'un rebord (18) qui délimite concentriquement l'ouverture (14), de 0,05 mm - 0,4 mm dans une direction radiale vers l'intérieur,
- lors de la mise en place des tôles d'induit (12) sur l'arbre d'induit (2) selon une direction axiale (16) de l'arbre d'induit (2), ladite au moins une protubérance (20) en direction radiale de 0,05 mm - 0,4 mm est incrustée dans la surface du matériau synthétique (10) de l'arbre d'induit (12), de telle manière que le paquet de tôles d'induit (6) est bloqué en rotation sur l'arbre d'induit (2).

2. Procédé selon la revendication 1, **caractérisé en ce que**, au moins deux protubérances radiales (20) s'étendant vers l'intérieur sont prévues, et sont incrustées dans la surface du matériau synthétique (10) lors de l'insertion.

3. Procédé selon la revendication 1 ou 2, **caractérisé en ce que**, les protubérances (20) sont incrustées radialement de 0,1 mm - 0,3 mm et en particulier de 0,1 mm - 0,25 mm dans la surface du matériau synthétique.

4. Arbre d'induit (2) comportant un paquet de tôles d'induit (6) pour un moteur électrique, dans lequel l'arbre d'induit (2) est soit réalisé intégralement en un matériau synthétique électriquement isolant soit sous la forme d'un arbre enrobé d'un matériau synthétique électriquement isolant (10), dans lequel l'enrobage (8) a une épaisseur d'au moins 1 mm, et dans lequel le paquet de tôles d'induit (6) empilées est constitué de tôles (12) pourvues d'une ouverture (14) non circulaire pourvue d'au moins une protubérance radiale (20) s'étendant radialement vers l'intérieur de l'ouverture (14) pour l'insertion sur l'arbre d'induit (2),
**caractérisé en ce que**, ladite au moins une protubérance (20) est formée pointu et, après l'insertion forcé selon une direction axiale sur le matériau synthétique de l'arbre d'induit (2), est incrustée de 0,05 mm - 0,4 mm selon une direction radiale dans la surface de ce matériau, et produit ainsi un blocage en rotation du paquet de tôles d'induit (6) sur l'arbre d'induit (2), et **en ce que** pour un diamètre de l'ouverture (14) des tôles d'induit (12), outre ladite au moins une protubérance (20), de 5 -15 mm, ladite au moins une protubérance (20) s'étend au-delà d'un rebord (18) qui délimite concentriquement l'ouverture (14), de 0,05 mm - 0,4 mm dans une direction radiale vers l'intérieur.

5. Arbre d'induit comportant un paquet de tôles d'induit (6), selon la revendication 4, **caractérisé en ce que**, l'enrobage (8) a une épaisseur d'au moins 1,2 mm.
